# EUROPÄISCHE PATENTANMELDUNG

(11) **EP 3 045 796 A1**
(43) Veröffentlichungstag der Anmeldung: **20.07.2016**
(21) Anmeldenummer: 15151638.2
(22) Anmeldetag: 19.01.2015
(51) Int. Cl.: F16L 25/00, F16L 37/113, F23J 13/04

(54) **Abgasrohr, Abgasrohrsystem sowie Demontageverfahren**

(71) Anmelder: Bächle, Stefano, 8597 Landschlacht (CH)
(72) Erfinder: Bächle, Stefano, 8597 Landschlacht (CH)
(74) Vertreter: Wagner, Kilian

(57) **Zusammenfassung**

Die Erfindung betrifft ein Abgasrohr aus Kunststoff, bevorzugt Polyamid zur Abgasführung von Heizungsanlagen mit abwechselnd angeordneten starren Glattrohr- und biegbaren Wellrohrabschnitten (2, 3), wobei an das Abgasrohr (1) integrale, als Bajonettverschlussmittel (5) ausgebildete Sicherungsmittel angeformt sind, die derart ausgebildet sind, dass an diesen ein, bevorzugt hülsenförmiges, zu den Bajonettverschlussmitteln (5) des Abgasrohres (1) korrespondierende sicherungselementseitige Bajonettverschlussmittel (16) aufweisendes Sicherungselement (14) durch eine axiale Aufsteckbewegung sowie eine Drehbewegung relativ zu dem Abgasrohr (1) in eine Festlegeumfangsrichtung in eine Fixierposition überführbar und dadurch an dem Abgasrohr (1) axial sicherbar ist, Ferner ist vorgesehen, dass an das Abgasrohr (1) mindestens eine eine Löseposition für das Sicherungselement (14) definierende Löseanschlagsgeometrie (8) zur Begrenzung einer Verdrehbewegung des Sicherungselementes (14) relativ zu dem Abgasrohr (1) entgegen der Festziehumfangsrichtung (F) in einer Löseumfangsrichtung (L) angeformt ist, gegen die das Sicherungselement (14) aus der Fixierposition durch Verdrehen in der Löseumfangsrichtung (L) verstellbar ist und das Sicherungselement (14) in der Löseposition axial entgegen der Aufsteckbewegung von dem Abgasrohr (1) abziehbar ist.

## Beschreibung

Die Erfindung betrifft ein Abgasrohr gemäß dem Oberbegriff des Anspruchs 1 zur Abgasführung von Heizungsanlagen aus Kunststoff, vorzugsweise aus Polyamid, mit abwechselnd angeordneten starren Glattrohr- und biegbaren Wellrohrabschnitten. Ferner betrifft die Erfindung ein Abgasrohrsystem gemäß Anspruch 13, das neben einem Abgasrohr oder einem daraus abgetrennten Abgasrohrabschnitt ein Sicherungselement umfasst. Zudem betrifft die Erfindung ein Verfahren zur Demontage einer Verbindung aus einem Abgasrohr oder eines Abgasrohrabschnittes eines erfindungsgemäßen Abgasrohrsystems von einem Muffenrohr gemäß dem Oberbegriff des Anspruchs 15.

Aus der EP 1 0243 321 B1 ist ein Abgasrohr aus Kunststoff mit abwechselnd angeordneten starren Glattrohr- und biegbaren Wellrohrabschnitten bekannt. Das bekannte Abgasrohr bildet einen Rohrstrang, aus dem Abgasrohrabschnitte, umfassend jeweils zwei endseitige starre Glattrohrabschnitte und mindestens einen dazwischen angeordneten, biegbaren Wellrohrabschnitt, beispielsweise durch Sägen oder Schneiden, heraustrennbar sind, insbesondere um winklig zueinander angeordnete oder parallel versetzte starre Rohrstücke (flexibel) über den Abgasrohrabschnitt miteinander zu verbinden, indem die Glattrohrabschnitte des Abgasrohres oder des daraus abgetrennten Abgasrohrabschnittes in entsprechende Muffen der versetzt zueinander angeordneten starren Abgasrohre eingeschoben werden. Die Abdichtung des Abgasstroms erfolgt über in Ringnuten der Muffenrohre angeordnete Dichtungen. Zur axialen Sicherung des Abgasrohres oder des Abgasrohrabschnittes mit seinen starren Glattrohr- und biegbaren Wellrohrabschnitten ist es bekannt, in die die Dichtung aufnehmende Ringnut einen Federring aufzunehmen, der sich radial innen an einen Glattrohrabschnitt des Abgasrohres bzw. des Abgasrohrabschnittes abstützt und diesen bzw. diesen klemmend fixiert. Das bekannte Abgasrohr mit seinen abwechselnd starren Glattrohr- und biegbaren Wellrohrabschnitten hat sich hervorragend in der Praxis bewehrt. Es bestehen jedoch Bestrebungen, die Montage des Abgasrohres und insbesondere die axiale Sicherung des Abgasrohres an als Muffenrohr ausgebildeten Rohren zu erleichtern.

Aus der EP 2 762 761 A2 des Anmelders ist ein gegenüber dem vorgenannten Stand der Technik verbessertes Abgasrohrsystem vorgeschlagen worden, bei dem an das abwechselnd angeordnete Glattrohrabschnitte und Wellrohrabschnitte aufweisende Abgasrohr Bajonettverschlussmittel im Bereich jedes Glattrohrabschnittes angeformt sind, wobei die Bajonettverschlussmittel der endseitigen Glattrohrabschnitte mit sicherungselementseitigen Bajonettverschlussmitteln eines ringförmigen Sicherungselementes in der Art eines Bajonettverschlusses zusammenwirken. Ein solches Abgasrohr weist überwiegende Vorteile in der Handhabung auf, da ein axial wirksamer Formschluss zwischen dem Sicherungselement und dem Abgasrohr durch eine einfache Steck-Drehbewegung hergestellt und umgekehrt wieder gelöst werden kann. In der Praxis hat sich jedoch herausgestellt, dass der Lösevorgang verbesserungswürdig ist. Insbesondere in dem bestimmungsgemäßen Einsatzbereich in dunklen Schächten kommt es vor, dass der Benutzer das Sicherungselement beim Lösen der Verbindung in der Löserichtung zu weit dreht und dabei den Abstand zwischen zwei Radialfortsätzen der Sicherungsmittel überdreht, so dass nach dieser Verdrehbewegung immer noch bzw. wieder ein axialer Formschluss zwischen dem Sicherungselement und dem Abgasrohr existiert und somit ein axiales Abziehen nicht möglich ist.

Ausgehend von dem vorgenannten Stand der Technik liegt der Erfindung die Aufgabe zugrunde, ein Bajonettverschlussmittel aufweisendes, gattungsgemäßes Kunststoff-Abgasrohr derart weiterzubilden, dass ein komfortables und definiertes Lösen einer einmal hergestellten, in axialer Richtung wirksamen Formschlussverbindung zwischen einem Sicherungselement und dem Abgasrohr möglich ist. Ferner besteht die Aufgabe darin, ein solches Abgasrohr und ein Sicherungselement umfassendes Abgasrohrsystem sowie ein vereinfachtes bzw. definiertes Montageverfahren zum Lösen eines gattungsgemäßen Abgasrohres von einem Muffenrohr anzugeben.

Diese Aufgabe wird hinsichtlich des Abgasrohres mit den Merkmalen des Anspruchs 1 gelöst, d.h. bei einem gattungsgemäßen Abgasrohr dadurch, dass an das Abgasrohr mindestens eine eine (Umfangs-) Löseposition für das Sicherungselement definierende Löseanschlagsgeometrie zur Begrenzung einer Verdrehbewegung des Sicherungselementes relativ zu dem Abgasrohr entgegen der Festziehumfangsrichtung in einer Löseumfangsrichtung angeformt ist, gegen die das Sicherungselement aus der Fixierposition, in der das Sicherungselement axial formschlüssig über die Bajonettverschlussmittel am Abgasrohr gesichert ist, durch Verdrehen in der Löseumfangsrichtung verstellbar ist und dass das Sicherungselement in der Löseposition axial entgegen der Aufsteckbewegung von dem Abgasrohr abziehbar, d.h. nicht axial am Abgasrohr gesichert ist. Dabei ist es besonders bevorzugt, wenn an der Mehrzahl von Glattrohrabschnitten, vorzugsweise an sämtlichen Glattrohrabschnitten des eine Mehrzahl von Glattrohrabschnitten und eine Mehrzahl von Wellrohrabschnitten umfassenden Abgasrohres mindestens eine solche Löseanschlagsgeometrie vorgesehen ist. Bevorzugt sind an den Glattrohrabschnitten jeweils mehrere in Umfangsrichtung beabstandete Löseanschlagsgeometrien vorgesehen. Ganz besonders bevorzugt ist es, wenn Löseanschlagsgeometrien, insbesondere zusammen mit entsprechenden Bajonettverschlussmitteln jeweils an beiden Enden der Mehrzahl von Glattrohrabschnitten, vorzugsweise sämtlichen jeweils zwischen zwei Wellrohrabschnitten angeordneten Glattrohrabschnitten des Abgasrohres angeformt sind.

Hinsichtlich des Abgasrohrsystems wird die Aufgabe mit den Merkmalen des Anspruchs 13 und hinsichtlich des Demontage bzw. Löseverfahrens mit den Merkmalen des Anspruchs 15 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, an einem aus Kunststoff ausgebildeten Abgasrohr, welches sowohl eine Mehrzahl von starren Glattrohrabschnitten sowie eine Mehrzahl von biegbaren bzw. flexiblen Wellrohrabschnitten aufweist zusätzlich zu den Bajonettverschlussmitteln, über die das von dem Abgasrohr separate Sicherungselement axial an dem Abgasrohr durch eine Steck-Drehbewegung festlegbar ist, insbesondere an jedem Glattrohrabschnitt, jeweils eine Löseanschlagsgeometrie vorzusehen, die derart ausgebildet und angeordnet ist, dass mit dieser eine Verdrehbewegung des Sicherungselementes relativ zu dem Abgasrohr entgegen der Festziehumfangsrichtung, d.h. in einer Löseumfangsrichtung begrenzbar ist, um auf diese Weise eine Löseposition für das Sicherungselement zu definieren, gegen die das Sicherungselement (mit entsprechenden Wechselwirkungsmitteln, insbesondere in Form von den sicherungselementseitigen Bajonettverschlussmitteln) in der Löseumfangsrichtung verdrehbar ist, wobei in dieser Löse- bzw. Anschlagsposition gewährleistet ist, dass der axial wirksame Formschluss zwischen den Bajonettverschlussmitteln des Abgasrohres und den sicherungselementseitigen Bajonettverschlussmitteln nicht (mehr) besteht und in der Folge eine axiale Relativbewegung des Abgasrohres zu den Sicherungsmitteln möglich ist und dadurch Sicherungselement und Abgasrohr durch diese, insbesondere ausschließliche, axiale Abziehbewegung voneinander getrennt werden können. Mit anderen Worten umfasst das Abgasrohr, insbesondere an sämtlichen Bajonettverschlussmitteln der unterschiedlichen Glattrohrabschnitte, jeweils eine Löseanschlagsgeometrie, die verhindert, dass beim Verdrehen des Sicherungselementes in der Löseumfangsrichtung von den sicherungselementseitigen Bajonettverschlussmitteln Abstände zwischen zwei in Umfangsrichtung benachbarten Radialfortsätzen der Bajonettverschlussmittel überdreht werden, sondern gewährleisten vielmehr das Erspüren einer definierten Löserelativposition zwischen Sicherungselement und Abgasrohr durch den Benutzer, insbesondere in schlecht einsehbaren Einsatzpositionen, wie beispielsweise in Abgasschächten, so dass der Benutzer erspürt bzw. weis, wann Sicherungselement und Abgasrohr so relativ zueinander positioniert bzw. verdreht sind, dass in einer reinen axialen Löse- bzw. Absteckbewegung das Sicherungselement und das Abgasrohr voneinander trennbar sind.

Wie bereits angedeutet ist es besonders bevorzugt, wenn das Abgasrohr an sämtlichen, der jeweils zwischen zwei axial beabstandeten Wellrohrabschnitten angeordneten Glattrohrabschnitten Bajonettverschlussmittel aufweist, die noch weiter bevorzugt jeweils mindestens zwei in Umfangsrichtung beabstandete Radialfortsätze umfassen. Bevorzugt sind solche Bajonettverschlussmittel jeweils im Bereich beider axialer Enden der vorgenannten Glattrohrabschnitte angeordnet. Noch weiter bevorzugt ist nun eine Ausführungsform, bei der jedem der vorgenannten Bajonettverschlussmittel mindestens eine Löseanschlagsgeometrie zugeordnet ist. Besonders bevorzugt ist eine Ausführungsform, bei der jedem der Radialfortsätze der Bajonettverschlussmittel jeweils eine Löseanschlagsgeometrie zugeordnet ist und insbesondere an diese angrenzt.

Durch die Erfindung ist es möglich, das von dem Abgasrohr durchsetzte Sicherungselement und das Abgasrohr aus einer Fixierposition in eine definierte Relativposition (Löseposition bzw. Löseumfangsposition) zu verdrehen, in der eine axiale Verstellbewegung ein Trennen von Sicherungselement und Abgasrohr ermöglicht. Insbesondere dann, wenn an jedem der zwischen zwei Wellrohrabschnitten vorgesehenen Glattrohrabschnitte Bajonettverschlussmittel im Bereich beider axialer Enden des jeweiligen Glattrohrabschnittes vorgesehen sind, denen jeweils mindestens eine Löseanschlagsgeometrie zugeordnet ist, ist es möglich, beliebige Abgasrohrabschnitte durch Trennen des Abgasrohres, insbesondere mittig an einem beliebigen Glattrohrabschnitt, herzustellen, wobei dann jeder Abgasrohrabschnitt zwei endseitige Glattrohrabschnitte aufweist, die jeweils Bajonettverschlussmittel aufweisen, denen wiederum jeweils mindestens eine Löseanschlagsgeometrie zugeordnet ist, um so die vorgenannte Funktionalität unabhängig von der Trennposition des Abgasrohres, also an jedem beliebigen Abgasrohrabschnitt zu erhalten, der bevorzugt mindestens zwei endseitige Glattrohrabschnitte und mindestens einen dazwischen angeordneten, biegbaren Wellrohrabschnitt aufweist.

Besonders zweckmäßig ist eine Ausführungsform, bei der die mindestens eine Löseanschlagsgeometrie in einem Bereich axial zwischen den Bajonettverschlussmitteln und einem angrenzenden Wellrohrabschnitt auf einer von einem endseitigen der Glattrohrabschnitte abgewandten Seite der Bajonettverschlussmittel angeordnet ist. Besonders bevorzugt ist es, wenn, wie erwähnt, sämtlichen Bajonettverschlussmitteln jeweils mindestens eine Löseanschlagsgeometrie zugeordnet ist und diese Löseanschlagsgeometrien jeweils zwischen den jeweiligen Bajonettverschlussmitteln und einem unmittelbar angrenzenden Wellrohrabschnitt des Abgasrohres, also auf der dem unmittelbar benachbarten Glattrohrabschnitt abgewandten Seite der Bajonettverschlussmittel angeordnet sind.

Besonders zweckmäßig ist, wie ebenfalls bereits angedeutet, eine Ausführungsform, bei der die Bajonettverschlussmittel des Abgasrohres jeweils mehrere in Umfangsrichtung beabstandete, vorzugsweise auf derselben Axialposition befindliche und sich jeweils in Umfangsrichtung sowie in radialer Richtung nach außen erstreckende Radialfortsätze umfassen und dass die sicherungselementseitigen Bajonettverschlussmittel in der Löseposition (in welcher entsprechende Wechselwirkungsmittel des Sicherungselementes an der den Bajonettverschlussmitteln zugeordneten Löseanschlagsgeometrie anliegen) axial durch mindestens einen zwischen zwei der Radialfortsätze gebildeten Abstand hindurch verstellbar sind, um somit durch die, insbesondere ausschließliche, axiale Trennbewegung das Abgasrohr von dem Sicherungselement zu trennen, welches bevorzugt zu diesem Zeitpunkt axial gesichert ist an einem Muffenrohr, mit welchem das Abgasrohr vor der axialen Relativbewegung festgelegt bzw. in einer Muffe dieses Muffenrohres mittels eines Glattrohrabschnitte aufgenommen ist.

Im Hinblick auf die konkrete Anordnung der mindestens einen Löseanschlagsgeometrie gibt es unterschiedliche Möglichkeiten. Wesentlich ist es, dass beim bzw. nach dem Anschlagen von entsprechenden Wechselwirkungsmitteln des Sicherungselementes an der Löseanschlagsgeometrie also in der Löseposition Sicherungselement und Abgasrohr in einer reinen axialen Bewegung voneinander getrennt werden können. Bevorzugt ist eine Ausführungsform bzw. Anordnung der Löseanschlagsgeometrie, bei der diese in axialer Richtung (Längserstreckung des Abgasrohres) mit einem in der Festziehumfangsrichtung gelegenen und einen der Abstände zwischen zwei Radialfortsätzen begrenzenden Radialfortsatzende von einem der Radialfortsätze fluchtet oder alternativ zu dem vorgenannten Radialfortsatz in der Festziehumfangsrichtung beabstandet ist. Insbesondere indem die Löseanschlagsgeometrie das Radialfortsatzende in der Umfangsrichtung überragt.

Um nicht nur eine exakte Löseposition zu definieren bzw. für den Benutzer auch ohne Sichtkontakt spürbar zu machen sondern auch eine Fixierposition bzw. Fixierumfangsposition, in der ein Sicherungselement und Abgasrohr über die Bajonettverschlussmittel axial definiert gesichert sind, ist es bevorzugt und in Weiterbildung der Erfindung vorgesehen, dass an das Abgasrohr eine die Fixierposition definierende Fixieranschlagsgeometrie zur Begrenzung der Verdrehbewegung des Sicherungselementes relativ zu dem Abgasrohr in der Festziehumfangsrichtung angeformt ist, die derart ausgebildet und angeordnet ist, dass das Sicherungselement gegen diese in der Festziehumfangsrichtung (mit entsprechenden Wechselwirkungsmitteln, bevorzugt in Form der sicherungselementseitigen Bajonettverschlussmittel) nach erfolgter axialer Steckbewegung, also ausgehend von der Löseposition (Löseumfangsposition) verdrehbar ist. Auch hier ist es bevorzugt, wenn sämtlichen Glattrohrabschnitten, insbesondere sämtlichen Bajonettverschlussmitteln, bevorzugt in Form von jeweils mindestens zwei in Umfangsrichtung beabstandeten Radialfortsätzen mindestens eine solche Fixieranschlagsgeometrie zugeordnet ist, so dass dann eine Relativverdrehung des Sicherungselementes zum Abgasrohr nur zwischen einer definierten Lösungsposition und einer definierten (in Umfangsrichtung beabstandeten) relativen Fixierposition möglich ist.

Im Hinblick auf die konkrete Ausgestaltung der Fixieranschlagsgeometrie und der Löseanschlagsgeometrie gibt es unterschiedliche Möglichkeiten. So ist es denkbar, dass die Fixieranschlagsgeometrie und die Löseanschlagsgeometrie von voneinander separaten, in Umfangsrichtung beabstandeten radialen Erhöhungen gebildet sind. Besonders bevorzugt ist eine Ausführungsform, bei der zumindest eine Löseanschlagsgeometrie, vorzugsweise sämtliche Löseanschlagsgeometrien und eine jeweils zugehörige Fixieranschlagsgeometrie von einer gemeinsamen radialen Erhöhung gebildet sind und zwar bevorzugt von separaten, in Umfangsrichtung beabstandeten radialen Flanken dieser gemeinsamen radialen Erhöhung.

Als besonders zweckmäßig hat es sich in Weiterbildung der Erfindung herausgestellt, wenn, vorzugsweise in der Festziehumfangsrichtung vor der Fixieranschlagsgeometrie, eine Widerstandsgeometrie zum Erhöhen des Kraftaufwandes an einer definierten Umfangsrelativposition von Abgasrohr und Sicherungselement beim Relativverdrehen des Sicherungselementes und des Abgasrohres beim Herstellen und/oder Lösen des in axialer Richtung wirksamen Formschlusses angeformt ist. Die Widerstandsgeometrie bildet mit der zugehörigen Fixieranschlagsgeometrie ein Positionierungshilfegeometriepaar. Bevorzugt sind mehrere, insbesondere gleichmäßig in Umfangsrichtung beabstandete Positionierungshilfegeometriepaare, bevorzugt an sämtlichen Bajonettverschlussmitteln, die wiederum jeweils mindestens zwei in Umfangsrichtung beabstandete Radialfortsätze umfassen, vorgesehen. Bei der vorgenannten Positionierungshilfegeometrie begrenzt die Fixieranschlagsgeometrie wie bereits erwähnt, die Relativbewegung des Sicherungselementes in der Festziehumfangsrichtung durch entsprechende Wechselwirkung mit dem Sicherungselement. Die Widerstandsgeometrie erhöht den Kraftaufwand an einer definierten Umfangsrelativposition während einer Relativbewegung von Sicherungselement und Abgasrohr durch entsprechende Wechselwirkung mit Wechselwirkungsmitteln des Sicherungselementes. Anders ausgedrückt umfasst das Abgasrohr weiterbildungsgemäß zusätzlich zu der Fixieranschlagsgeometrie eine Widerstandsgeometrie, die den Widerstand beim Relativverdrehen zwischen Abgasrohr und Sicherungselement erhöht, bevor die Relativbewegung durch Wechselwirkung des Sicherungselementes mit der Fixieranschlagsgeometrie gestoppt wird.

Die Widerstandsgeometrie gibt dem Benutzer somit eine Rückkopplung, kurz vor Erreichen der Endrelativposition (Fixierposition) zwischen Sicherungselement und Abgasrohr, in der der Formschluss sicher gewährleistet ist. Gleichzeitig erschwert die Widerstandsgeometrie bevorzugt ein unbeabsichtigtes Lösen, da beim Überwinden der Widerstandsgeometrie ein erhöhter Kraft- bzw. Drehmomentaufwand notwendig ist. Dabei ist die Radialerstreckung der Widerstandsgeometrie bevorzugt geringer als die der Anschlagsgeometrie um ein Überdrehen mit erhöhtem Kraftaufwand bewusst zu ermöglichen, während die Anschlagsgeometrie für einen, insbesondere sicheren Stopp in Umfangsrichtung Sorge trägt.

Besonders bevorzugt ist eine Ausführungsform, bei der, vorzugsweise in der Festziehumfangsrichtung vor der Fixieranschlagsgeometrie und noch weiter bevorzugt in der Festziehumfangsrichtung hinter der Widerstandsgeometrie eine, mehrere radiale Hügel (d.h. mehrere sich in radialer Richtung nach außen erstreckende Erhöhungen) umfassende Haptikgeometrie vorgesehen bzw. an das Abgasrohr angeformt ist, die beim Verdrehen des Sicherungselementes relativ zu dem Abgasrohr durch Wechselwirkung des Sicherungselementes mit der Haptikgeometrie über entsprechende Wechselwirkungsmittel in die Fixierposition und/oder in die Löseposition zu einer, vorzugsweise mehrere Schwingungsmaxima aufweisenden, Vibration des Sicherungselementes führt. Bevorzugt entsteht dabei ein ratterndes Geräusch, ähnlich einer Ratschenbetätigung. Hierdurch erspürt der Benutzer die Bewegung und weiß, er fährt so, dass die Relativrotationsbewegung bald bzw. in Kürze an der Fixierposition oder der Löseposition endet. Insgesamt wird hierdurch der Löse- und/oder Festziehvorgang komfortabler und definierter.

Im Hinblick auf die Ausgestaltung der starren Glattrohrabschnitte, insbesondere im Hinblick auf deren Axialerstreckung gibt es unterschiedliche Möglichkeiten. Bevorzugt ist die Axialerstreckung der Glattrohrabschnitte so gewählt, dass bei einer näherungsweise mittigen Trennung des Glattrohrabschnittes zwei Rohre resultieren, deren endseitige, zunächst aus einem gemeinsamen Glattrohrabschnitt resultierenden Glattrohrabschnitte jeweils so lange bemessen sind, dass beide dichtend jeweils in einem Muffenrohr mit Innendichtung aufgenommen werden können. Um dies zu erreichen ist weiterbildungsgemäß vorgesehen, dass die Axialerstreckung der jeweils zwischen zwei Wellrohrabschnitten angeordneten Glattrohrabschnitte mehr als 8 cm, bevorzugt mehr als 10 cm beträgt und ganz besonders bevorzugt aus einem Wertebereich zwischen 9 cm und etwa 19 cm gewählt ist. Bevorzugt ist der Innendurchmesser der Glattrohrabschnitte zumindest näherungsweise gleich groß wie der Innendurchmesser der Wellenrohrabschnitte im Bereich von dessen nach radial innen gerichteten Wellentälern.

Unabhängig von der Wellenerstreckung der Glattrohrabschnitte ist es besonders bevorzugt wenn die Glattrohrabschnitte eine Mittenmarkierung zur Markierung der axialen Mitte aufweisen, wobei es sich weiter bevorzugt um eine umfängliche Markierung, beispielsweise in Form einer umlaufenden Nut und/oder Radialerhebung handelt.

Im Hinblick auf die Ausgestaltung der Wellenkontur der Wellrohrabschnitte gibt es unterschiedliche Möglichkeiten. Bevorzugt handelt es sich längsschnittlich um eine gerundete Wellenkontur, wobei es selbstverständlich auch denkbar ist eine eckige/rechteckige Wellenkontur zu realisieren. Besonders bevorzugt ist es, die Löseanschlagsgeometrie als radiale Erhöhung auszubilden, da sich derart gestaltete Geometrien besonders einfach bei einem bevorzugten Herstellungsverfahren des Abgasrohrs durch Extrusionsformen (Blasen und/oder Saugen) realisieren lassen. Besonders zweckmäßig ist es dabei, wenn vorgenannte Geometrien von der Rohrinnenseite her betrachtet als sich nach außen erstreckende Vertiefungen ausgebildet sind. Dies gilt auch bevorzugt für die Bajonettverschlussmittel bzw. deren Radialfortsätze und/oder später noch zu erläuternde Fixieranschlagsgeometrien und/oder Widerstandsgeometrien und/oder Haptikgeometrien.

Besonders zweckmäßig ist es, wenn die betragsmäßige Radialerstreckung der Fixieranschlagsgeometrie und/oder der Löseanschlagsgeometrie nach radial innen oder nach radial außen größer ist, insbesondere mindestens doppelt so groß ist wie die betragsmäßige Radialerstreckung der vorgenannten Widerstandsgeometrie nach radial innen bzw. nach radial außen, bevorzugt gemessen ausgehend von einem Außendurchmesser eines der Glattrohrabschnitte. Besonders zweckmäßig hat es sich dabei herausgestellt, wenn die Radialerstreckung der Widerstandsgeometrie kleiner ist als 1 mm, bevorzugt zumindest näherungsweise 0,8 mm beträgt und die Radialerstreckung der Fixieranschlagsgeometrie und/oder der Löseanschlagsgeometrie größer ist als 1 mm, vorzugsweise größer ist als 1,5 mm, ganz besonders bevorzugt zumindest 1,8 mm beträgt.

Im Hinblick auf die konkrete Ausgestaltung der Bajonettverschlussmittel des Abgasrohres ist es bevorzugt, wenn diese jeweils mindestens zwei in Umfangsrichtung beabstandete, vorzugsweise mehr als zwei, insbesondere gleichmäßig in Umfangsrichtung verteilt angeordnete, nach radial außen ragende und sich in Umfangsrichtung erstreckende Radialfortsätze aufweist bzw. aufweisen, die sich bevorzugt über einen Umfangswinkel von mindestens 5° in Umfangsrichtung erstrecken und die hintergriffen werden können von entsprechenden (sicherungselementseitigen) Bajonettverschlussmitteln des Sicherungselementes in der Art eines Bajonettverschlusses zur axialen Sicherung. Bevorzugt sind die Bajonettverschlussmittel des zugehörigen Sicherungselementes dabei als nach radial innen ragende Fortsätze ausgebildet, die sich ebenfalls in Umfangsrichtung erstrecken, vorzugsweise um mindestens 5° in Umfangsrichtung.

Bevorzugt ist die Wandstärke des Abgasrohres axial durchgängig zumindest näherungsweise konstant und beträgt noch weiter bevorzugt zwischen 0,8 mm und 2,5 mm, ganz besonders bevorzugt zwischen 1 mm und 2 mm, noch weiter bevorzugt zumindest näherungsweise 1,2 mm.

Um eine optimale Anschlags- bzw. Stoppwirkung der Löseanschlagsgeometrie und/oder der Fixieranschlagsgeometrie zu bewirken ist in Weiterbildung der Erfindung mit Vorteil vorgesehen, dass eine Wand bzw. Flanke, an der die entsprechende Wechselwirkungsmittel des Sicherungselementes bei einer Drehbewegung des Sicherungselementes in Umfangsrichtung anschlagen können zumindest näherungsweise radial verläuft. Ein exakt radialer Verlauf ist im Hinblick auf eine gute Entformbarkeit des Abgasrohres bei dessen Herstellung aus einem Werkzeug problematisch. Daher beträgt der Winkel der vorgenannten Anschlagswand bzw. -flanke zur radialen, vorzugsweise zwischen 0,5° und 5°, ganz besonders bevorzugt zwischen 0,5° und 2°.

Bei Bedarf können die Bajonettverschlussmittel eine Steigung aufweisen, um auf diese Weise das Sicherungselement und das Abgasrohr bei einer Relativrotationsbewegung in axialer Richtung zu verspannen. Zusätzlich oder alternativ kann eine entsprechende axiale Steigung am Sicherungselement vorgesehen sein. Auch ist es denkbar und bevorzugt, auf eine solche axiale Steigung sowohl am Sicherungselement als auch am Abgasrohr zu verzichten, da eine axiale Verspannung (insbesondere bei einer über eine Fixieranschlaggeometrie definierten Fixierposition) nicht notwendig ist.

Die Erfindung führt auch auf die Verwendung eines Abgasrohrabschnittes, der erhalten wird durch Abtrennen von einem nach dem Konzept der Erfindung ausgebildeten Abgasrohres zur Abgasführung einer Heizungsanlage, insbesondere in einem Gebäude. Bevorzugt umfasst der Abgasrohrabschnitt dabei zwei endseitige Glattrohrabschnitte und mindestens einen dazwischen angeordneten biegbaren Wellrohrabschnitt, vorzugsweise mehrere dazwischen angeordnete starre Glattrohr- und Wellrohrabschnitte.

Bevorzugt wird zum Erhalten des Abgasrohrabschnittes ein Glattrohrabschnitt des Abgasrohres, zumindest näherungsweise mittig abgetrennt. Bevorzugt weist der Abgasrohrabschnitt an sämtlichen endseitigen Glattrohrabschnitten Bajonettverschlussmittel mit zugehöriger Löseanschlagsgeometrie auf, wobei noch weiter bevorzugt auch an sämtlichen dazwischen angeordneten Glattrohrabschnitten Bajonettverschlussmittel mit zugehöriger Löseanschlagsgeometrie angeordnet bzw. angeformt sind.

Das Abgasrohr wird im Rahmen der Verwendung in die Muffe eines Muffenrohres eingeschoben und mit einem Sicherungselement an dem Muffenrohr gesichert, wobei das Sicherungselement über sicherungselementseitige Bajonettverschlussmittel mit den Bajonettverschlussmitteln des Abgasrohrabschnittes axial gesichert wird, wobei das Sicherungselement wiederum an dem Muffenrohr axial festgelegt ist, insbesondere indem es einen Ringwulst des Muffenrohres übergreift, wobei ganz besonders bevorzugt innerhalb dieses Ringwulstes eine Ringnut ausgebildet ist, in der eine Ringdichtung aufgenommen ist, die bei fertiger Montage radial außen am endseitigen Glattrohrabschnitt des Abgasrohrabschnittes anliegt.

Die Erfindung führt auch auf ein Abgasrohrsystem. Dieses umfasst neben einem erfindungsgemäßen Abgasrohr oder eines zuvor beschriebenen Abgasrohrabschnittes ein vorzugsweise hülsen- bzw. ringförmiges Sicherungselement zum Herstellen eines axial wirksamen Formschlusses zur Sicherung gegen Abziehen zwischen dem Sicherungselement und dem Abgasrohr bzw. dem Abgasrohrabschnitt. Hierzu umfasst das Sicherungselement als auch das Abgasrohr Bajonettverschlussmittel die durch eine Steck- bzw. Drehbewegung in der Art eines Bajonettverschlusses zusammenwirken. An dem Abgasrohr bzw. Abgasrohrabschnitt ist eine Löseanschlagsgeometrie angeformt, die eine definierte Löseposition (Löserelativposition) zwischen dem Sicherungselement, welches von dem Abgasrohr bzw. Abgasrohrabschnitt axial durchsetzt ist, definiert, wobei in dieser Löseposition durch eine ausschließliche axiale Relativbewegung zwischen Sicherungselement und Abgasrohr bzw. Abgasrohrabschnitt voneinander getrennt werden können, insbesondere zur Demontage eines Abgasrohrs oder Abgasrohrabschnittes von einem Muffenrohr, in welches das Abgasrohr bzw. der Abgasrohrabschnitt vor dem vorgenannten Trenn- bzw. Demontageschritt eingeführt war.

Zum axialen Sichern des Sicherungselementes an dem Muffenrohr weist das Sicherungselement bevorzugt federnde Laschen auf, mit welchen ein Ringwulst des Sicherungselementes hintergreifbar ist. Zu diesem Zweck kann das Sicherungselement zunächst axial über den Ringwulst geschoben werden, wobei während dieser Aufschubbewegung die Federlaschen zunächst nach radial außen federn, um dann den Ringwulst zu hintergreifen.

Besonders zweckmäßig ist es, wenn an dem Abgasrohr oder Abgasrohrabschnitt eine bereits im Zusammenhang mit dem Abgasrohr erläuterte Haptikgeometrie zum in Schwingung versetzen bzw. zur Erzeugung eines Ratschengeräusches vorgesehen ist. Im Rahmen des Abgasrohrsystems ist an dem Sicherungselement eine Gegenhaptikgeometrie angeformt, die in radialer Richtung mit der Haptikgeometrie in Wechselwirkung tritt, um die gewünschte Vibration hervorzurufen. Bevorzugt wird diese Gegenhaptikgeometrie von den sicherungselementseitigen Bajonettverschlussmitteln gebildet, wobei die Gegenhaptikgeometrie bevorzugt so ausgebildet ist, dass sie in radialer Richtung zwischen zwei in Umfangsrichtung benachbarte Hügel der Haptikgeometrie bei einer Relativverdrehbewegung eintauchen kann.

Die Erfindung führt auch auf ein Verfahren zur Demontage eines Abgasrohres oder eines hiervon abgetrennten Abgasrohrabschnittes des erfindungsgemäßen Abgasrohrsystems von einem Muffenrohr, wobei zunächst noch ein endseitiger Glattrohrabschnitt des Abgasrohres bzw. Abgasrohrabschnittes in der Muffe des Muffenrohres steckt und das Abgasrohr an dem Muffenrohr mittels eines Sicherungselementes des Abgasrohrsystems festgelegt ist. Erfindungsgemäß wird nun das Sicherungselement aus seiner Fixierposition in einer Löseumfangsrichtung relativ zu dem Abgasrohr verdreht, wobei das Sicherungselement dabei an dem Muffenrohr axial gesichert bleibt, insbesondere durch Übergreifen eines Ringwulstes, welcher noch weiter bevorzugt im Inneren eine Ringdichtung aufnimmt, welche im montierten Zustand radial außen am Glattrohrabschnitt des Abgasrohres bzw. Abgasrohrabschnittes anliegt. Die vorgenannte Verdrehbewegung erfolgt bis zum Anschlagen von Wechselwirkungsmitteln des Sicherungselementes an der Löseanschlagsgeometrie des Abgasrohres bzw. Abgasrohrabschnittes, worauf dann in einer reinen Axialbewegung das Abgasrohr bzw. der Abgasrohrabschnitt aus dem Muffenrohr herausgezogen werden kann und das Sicherungselement (zumindest zunächst) am Muffenrohr axial gesichert bleibt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a und Fig. 1b: einen Ausschnitt einer Vielzahl von Glatt- und Wellrohrabschnitten aufweisenden Abgasrohres aus Kunststoff,
- Fig. 2a bis Fig. 2c: unterschiedliche Darstellungen eines Sicherungselementes zur Verwendung mit einem Abgasrohr gemäß den Fig. 1a und 1b,
- Fig. 3: einen Endabschnitt eines Abgasrohres gemäß den Fig. 1a und 1b oder eines daraus hergestellten bzw. abgetrennten Abgasrohrabschnittes mit bereits aufgesetztem Sicherungselement,
- Fig. 4: Abgasrohr und Sicherungselement gemäß Fig. 3 in einer Löseposition, und
- Fig. 5: Abgasrohr und Sicherungselement gemäß den Figuren 3 und 4 in einer Fixierposition.

In den Figuren sind gleiche Elemente und Elemente mit der gleichen Funktion mit den gleichen Bezugszeichen gekennzeichnet.

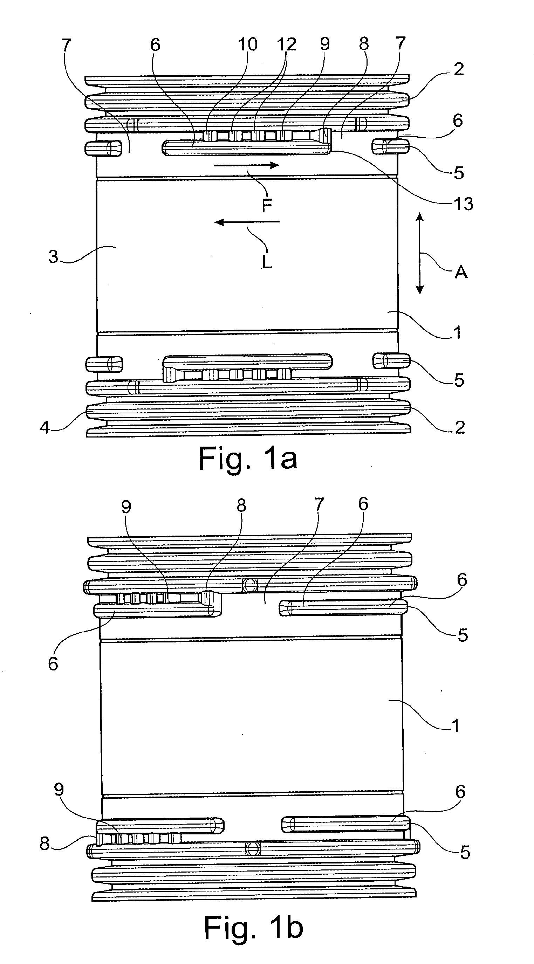

In den Figuren 1a und 1b ist ein Ausschnitt eines Abgasrohres 1 oder eines daraus hergestellten Abgasrohrabschnittes aus Kunststoff gezeigt, welches im Extrusionsformverfahren (Blasen und/oder Vakuum) hergestellt wurde. Das Abgasrohr umfasst abwechselnd angeordnete, biegbare Wellrohrabschnitte 2 und Glattrohrabschnitte 3 und ist als Rohrstrang aufrollbar. Die Wellrohrabschnitte 2 sind wie erwähnt, biegbar und ermöglichen diese Abrollbarkeit. Wie erwähnt, handelt es sich nur um eine ausschnittsweise Darstellung des Abgasrohres tatsächlich ist das Abgasrohr wesentlich länger und umfasst eine Vielzahl von abwechselnd angeordneten Wellrohr- und Glattrohrabschnitten und weist bevorzugt endseitig jeweils einen Glattrohrabschnitt auf. Anders ausgedrückt umfasst das Abgasrohr eine Vielzahl von in den Figuren 1a und 1b gezeigten, einstückig ausgebildeten Rohrabschnitten, wie diese in Fig. 1a und 1b gezeigt sind.

Die nicht gezeigten, endseitigen Glattrohrabschnitte dienen zum axialen Einschieben in ein als Muffenrohr ausgebildetes Rohrstück. Grundsätzlich kann jeder der zunächst zwischen zwei Wellrohrabschnitten liegenden Glattrohrabschnitte als endseitiger Glattrohrabschnitt dienen, wenn das Abgasrohr, insbesondere mittig, am entsprechenden Glattrohrabschnitt zerteilt bzw. aufgetrennt wird, wie dies bereits an sich bekannt ist.

In dem gezeigten Ausführungsbeispiel bestehen die Wellerohrabschnitte 2 aus einer Vielzahl von axial nebeneinander angeordneten Wellen 4 die von innen her betrachtet als umfangsgeschlossene Ringnuten ausgebildet sind. Die Wellen 4 befinden sich in axial zueinander benachbarten parallelen Radialebenen, d.h. sie sind steigungsfrei ausgebildet, wie dies aus dem Stand der Technik beschriebenen Wellrohren bekannt ist. Die Kontur der Wellen 4 ist von außen betrachtet zumindest näherungsweise trapezförmig, wobei auch andere Konturen, wie beispielsweise gerundete Konturen oder eckige Konturen realisierbar sind.

Abgasrohr 1 umfasst integrale Sicherungsmittel in der Form von Bajonettverschlussmitteln 5. Diese sind ausgebildet jeweils in der Form von in Umfangsrichtung beabstandeten und jeweils auf der selben axialen Höhe befindlichen nach radial außen weisenden Radialfortsätze 6, die zusammen mit geeigneten sicherungselementseitigen Bajonettverschlussmitteln (insbesondere nach radial innen weisende Radialfortsätze des Sicherungselementes) eines später noch zu erläuternden Sicherungselementes in der Art eines Bajonettverschlusses zusammenwirken können. Hierzu müssen die Bajonettverschlussmittel des Sicherungselementes axial im Bereich eines Abstandes 7 zwischen zwei benachbarten Radialfortsätzen 6 hindurch geschoben und dann in einer Festziehumfangsrichtung F verdreht werden, so dass sie die Radialfortsätze 6 hintergreifen und somit mit diesen eine in axialer Richtung wirksamen Formschluss ausbilden.

Zum Lösen der vorgenannten Formschlussverbindung muss dann in umgekehrter Reihenfolge vorgegangen werden, d.h. das Sicherungselement muss entgegen der Festziehumfangsrichtung F, d.h. in einer Löseumfangsrichtung L relativ zu dem Abgasrohr verdreht werden, bis entsprechende, später noch zu erläuternde Wechselwirkungsmittel des Sicherungselementes gegen eine Löseanschlagsgeometrie 8 des Abgasrohres 1 anstoßen. Diese Löseanschlagsgeometrie 8 definiert eine Löseposition des Sicherungselementes relativ zu dem Abgasrohr, in welcher durch eine reine axiale Bewegung entgegen der ursprünglich beschriebenen Steck- bzw. Einsteckbewegung Abgasrohr und Sicherungselement voneinander getrennt werden können. Dies wird dadurch sichergestellt, dass die Löseanschlagsgeometrie die Verdrehbewegung des später noch zu erläuternden Sicherungselementes in der Löseumfangsrichtung begrenzt und somit verhindert wird, dass die sicherungselementseitigen Bajonettverschlussmittel hinter einen benachbarten Radialfortsatz 6 gelangen und mit diesem dann wieder eine axiale Sicherung bzw. Formschlussverbindung eingehen.

Um eine Relativbewegung des Sicherungselementes in der Festziehumfangsrichtung zu begrenzen, weist das Abgasrohr 1 eine angeformte Fixieranschlaggeometrie 9 auf. Diese wird in den gezeigten Ausführungsbeispiel gebildet von einer radialen Erhebung, die von einer die Löseanschlagsgeometrie bildenden radialen Erhebung in Umfangsrichtung beabstandet ist. Alternativ ist es denkbar, beide Geometrien 8, 9 von zwei in Umfangsrichtung voneinander abgewandten Seiten einer gemeinsamen bzw. derselben Erhebung zu bilden.

In der Festziehumfangsrichtung vor und mit Abstand zu der Fixieranschlagsgeometrie 9 weist das Abgasrohr 1 eine Widerstandsgeometrie 10 auf, die eine geringere Radialerstreckung aufweist als die Fixieranschlaggeometrie 9 und die Anschlagsgeometrie 8. Hierdurch kann die Widerstandsgeometrie 10 (im Vergleich mit einer Verdrehbewegung mit Abstand zu der Widerstandsgeometrie) mit erhöhtem Kraftaufwand überdreht werden und signalisiert so dem Benutzer haptisch den korrekten Fixierund/oder Lösevorgang.

In Umfangsrichtung zwischen der Widerstandsgeometrie 10 und der Fixieranschlagsgeometrie 9 befindet sich eine Haptikgeometrie 12. Hier besteht diese aus zwei in Umfangsrichtung beabstandeten radialen Erhebungen, die durch entsprechende Wechselwirkung mit Wechselwirkungsmitteln des Sicherungselementes für eine Vibration des Sicherungselementes Sorge tragen bei einer Relativbewegung zum Abgasrohr in Umfangsrichtung.

Zu erkennen ist, dass die Löseanschlagsgeometrie 8 in axialer Richtung A mit einem in der Festziehumfangsrichtung gelegenen Radialfortsatz 13 fluchtet, welcher den Abstand zwischen zwei benachbarten Radialfortsätzen 6 begrenzt. Zu erkennen ist weiterhin, dass sich die Löseanschlagsgeometrie 8 in einem Bereich axial zwischen den Bajonettverschlussmitteln 5, genauer deren Radialfortsätzen 6 und des unmittelbar benachbarten Wellrohrabschnittes 2 angeordnet sind.

In den Figuren 1a und 1b ist gut zu erkennen, dass zu beiden Axialseiten eines zwischen zwei Wellrohrabschnitten 2 angeordneten Glattrohrabschnittes 3 jeweils Bajonettverschlussmittel 5 vorgesehen sind, die jeweils wiederum mehrere in Umfangsrichtung beabstandete Radialfortsätze 6 aufweisen. Sämtlichen Bajonettverschlussmitteln (nicht zwingend jedem von deren Radialfortsätzen) ist eine Löseanschlagsgeometrie 8 zugeordnet sowie eine Fixieranschlagsgeometrie 9. Zu erkennen ist hier auch die in Umfangsrichtung umgekehrte Anordnung von Löseanschlagsgeometrie 8 und Fixieranschlagsgeometrie 9. Dies ergibt sich daraus, dass der gezeigte Glattrohrabschnitt 3, bevorzugt in etwa mittig teilbar ist und dann zwei Abgasrohrabschnitte mit jeweils einem endseitigen Glattrohrabschnitt resultieren, welcher jeweils Bajonettverschlussmittel aufweist und dann in der jeweils gleichen Umfangsrichtung mit einem Sicherungselement zur Fixierung an einem Muffenrohr zusammenwirken kann.

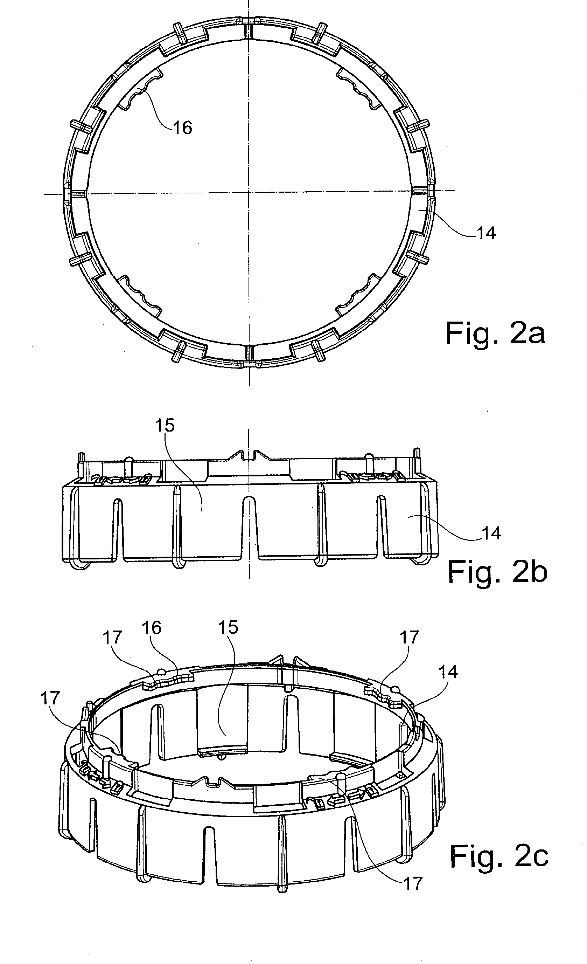

In den Figuren 2a bis 2c ist ein Sicherungselement 14 gezeigt, das mit einem in den Figuren 1a und 1b gezeigten Abgasrohr 1 bzw. Abgasrohrabschnitt zusammenwirken kann. Das Sicherungselement 14 ist hülsenbzw. ringförmig ausgebildet und weist Fixiermittel 15 in Form von in radialer Richtung federnden Zungen auf, mit denen ein Ringwulst eines Muffenrohres hintergreifbar ist, um somit das Fixierelement 15 an diesem Muffenrohr axial sichern zu können. Gleichzeitig weist das Sicherungselement 14 sicherungselementseitige Bajonettverschlussmittel 16 auf, zum Zusammenwirken mit den Bajonettverschlussmitteln 5 des Abgasrohres 1 in der Art eines Bajonettverschlusses. Die sicherungselementseitigen Bajonettverschlussmittel 16 bilden gleichzeitig unterschiedliche Arten von Wechselwirkungsmittel und zwar zum einen Wechselwirkungsmittel zum Anschlagen an der Löseanschlagsgeometrie 8 und an der Fixieranschlagsgeometrie 9. Gleichzeitig bilden die sicherungselementseitigen Bajonettverschlussmittel 16 Wechselwirkungsmittel zum Wechselwirken mit der Haptikgeometrie 12 außer der Widerstandsgeometrie 10.

Wie zu erkennen ist umfassen die sicherungselementseitigen Bajonettverschlussmittel 16 nach radial innen weisende sicherungselementseitige Radialfortsätze 17, die an ihrem Innenumfang gewellt bzw. gezackt ausgebildet sind. Um somit eine optimale Wechselwirkung mit der Widerstandsgeometrie 10 und der Haptikgeometrie 12 zu gewährleisten. Die sicherungselementseitigen Radialfortsätze 17 werden zum Herstellen und Lösen der Verbindung zwischen Sicherungselement und Abgasrohr durch die zuvor beschriebenen Abstände 7 zwischen zwei Radialfortsätzen 6 der Bajonettverschlussmittel 5 des Abgasrohres axial hindurch geschoben. Die Löseanschlagsgeometrie 8 definiert eine Relativposition, an der dies mit einer reinen Axialbewegung möglich ist.

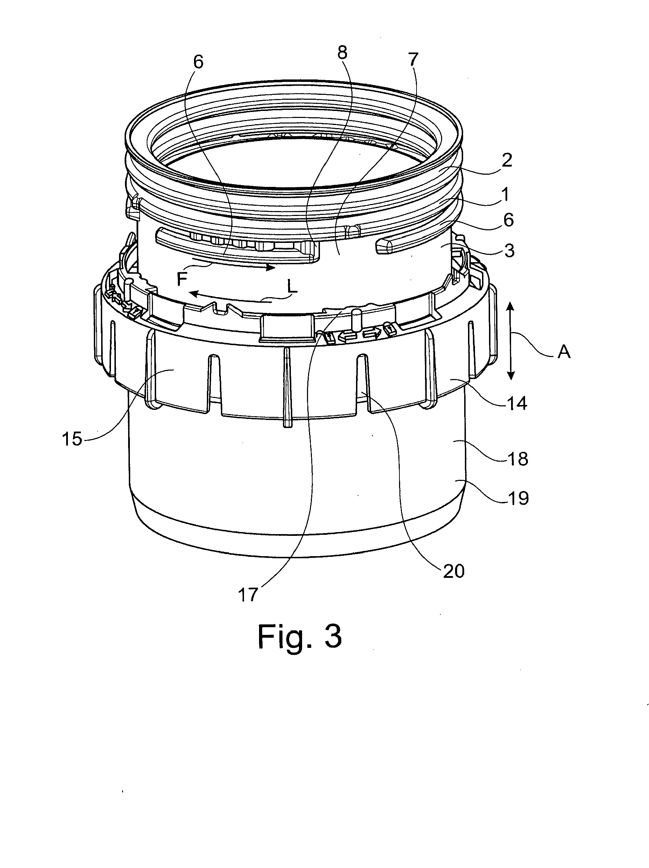

In Fig. 3 ist ein Endabschnitt eines Abgasrohres 1 zu erkennen. Gezeigt ist einer von bevorzugt mehreren Wellrohrabschnitten 2 und einer von zwei endseitigen Glattrohrabschnitten 3, welcher in die Muffe 18 eines Muffenrohrs 19 bereits teilweise axial eingeschoben ist. Das Sicherungselement 14 ist an einen Ringwulst 20 des Muffenrohres 19 axial gesichert. Hierzu hintergreifen die Fixiermittel 15 in Form der federnden Laschen den Ringwulst 20. Nun kann das Abgasrohr 1 weiter in das Muffenrohr 19 eingeschoben werden, wobei sichergestellt werden muss, dass die sicherungselementseitigen Radialfortsätze 17 axial mit den Abständen 17 zweier benachbarter Radialfortsätze 6 des Abgasrohres 1 fluchten.

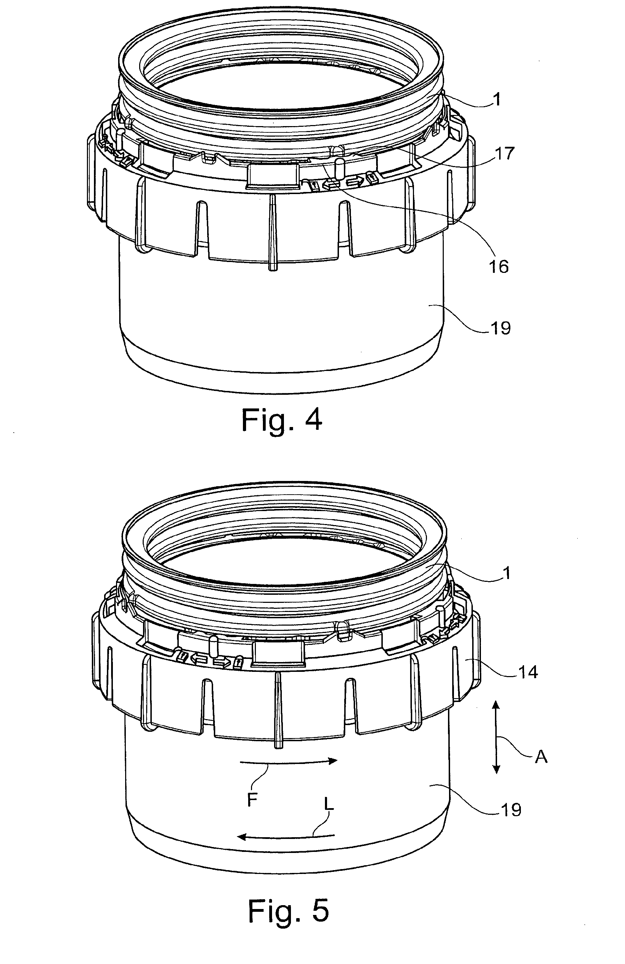

Fig. 4 zeigt nun einen weiteren Montagezustand, bei dem das Abgasrohr 1, genauer ein endseitiger Glattrohrabschnitt maximal in das Muffenrohr 19 eingeschoben ist. Die sicherungselementseitigen Radialfortsätze 17 der sicherungselementseitigen Bajonettverschlussmittel 16 befinden sich in einer Löseposition, in der die Trennung von Abgasrohr 1 und Muffenrohr 19 durch eine reine Axialbewegung wieder möglich ist. Zum Herstellen des gewünschten in axialer Richtung wirksamen Formschluss (vgl. Fig. 5) zwischen dem Sicherungselement 14 und dem Abgasrohr 1 muss das Sicherungselement 14 in der Festziehumfangsrichtung F relativ zu dem Abgasrohr 1 verdreht werden, wodurch die sicherungselementseitigen Radialfortsätze 17 hinter die Radialfortsätze 6 des Abgasrohres 1 gelangen. Diese Relativverdrehbewegung wird begrenzt von der zuvor bereits erläuterten Fixieranschlagsgeometrie 9, gegen die Wechselwirkungsmittel des Sicherungselementes 14, hier beispielhaft in Form der sicherungselementseitigen Bajonettverschlussmittel 16 bzw. sicherungselementseitigen Radialfortsätze 17 anschlagen. Beim Verdrehen in diese Fixierposition überstreifen Wechselwirkungsmittel des Sicherungselementes 14, hier beispielhaft in Form der sicherungselementseitigen Bajonettverschlussmittel bzw. Radialverschlussmittel, die Widerstandsgeometrie 10 sowie die Haptikgeometrie 12 mit den entsprechenden, zuvor bereits erläuterten Effekten.

Für die Demontage der gezeigten Verbindung aus Abgasrohr 1 und Muffenrohr 19 sowie Sicherungselement 14 muss das Sicherungselement in der Löseumfangsrichtung L verdreht werden und zwar aus der in Figur 5 gezeigten Fixierposition in die in Fig. 4 gezeigte Löseposition, die begrenzt bzw. definiert wird von der Löseanschlagsgeometrie 8. Gegen diese schlägt das Sicherungselement 14 mit entsprechenden Wechselwirkungsmitteln, hier beispielhaft in Form von sicherungselementseitigen Bajonettverschlussmittel bzw. Radialfortsätze an, woraufhin dann das Abgasrohr 1 in einer reinen Axialbewegung aus dem Muffenrohr 19 und in der Folge auch aus dem an dem Muffenrohr 19 axial gesicherten Sicherungselement 14 herausgezogen werden.

### Bezugszeichenliste

- 1: Abgasrohr
- 2: Wellrohrabschnitte
- 3: Glattrohrabschnitte
- 4: Wellen
- 5: Bajonettverschlussmittel
- 6: Radialfortsätze
- 7: Abstände
- 8: Löseanschlagsgeometrie
- 9: Fixieranschlagsgeometrie
- 10: Widerstandsgeometrie
- 12: Haptikgeometrie
- 13: Radialfortsatzende
- 14: Sicherungselement
- 15: Fixiermittel des Sicherungselementes
- 16: sicherungselementseitige Bajonettverschlussmittel
- 17: sicherungselementseitige Radialfortsätze der sicherungselementseitigen Bajonettverschlussmittel
- 18: Muffe
- 19: Muffenrohr
- 20: Ringwulst

- F: Festziehumfangsrichtung
- L: Löseumfangsrichtung
- A: Achse bzw. Axialerstreckung

## Patentansprüche

1. Abgasrohr aus Kunststoff, bevorzugt aus Polyamid, zur Abgasführung von Heizungsanlagen mit abwechselnd angeordneten starren Glattrohr- und biegbaren Wellrohrabschnitten (2, 3), wobei an das Abgasrohr (1) integrale, als Bajonettverschlussmittel (5) ausgebildete Sicherungsmittel (14) angeformt sind, die derart ausgebildet sind, dass an diesen ein, bevorzugt hülsenförmiges, zu den Bajonettverschlussmitteln (5) des Abgasrohres (1) korrespondierende sicherungselementseitige Bajonettverschlussmittel (16) aufweisendes Sicherungselement (14) durch eine axiale Aufsteckbewegung sowie eine Drehbewegung relativ zu dem Abgasrohr (1) in eine Festlegeumfangsrichtung in eine Fixierposition überführbar und dadurch an dem Abgasrohr (1) axial sicherbar ist,
**dadurch gekennzeichnet,**
**dass** an das Abgasrohr (1) mindestens eine eine Löseposition für das Sicherungselement (14) definierende Löseanschlagsgeometrie (8) zur Begrenzung einer Verdrehbewegung des Sicherungselementes (14) relativ zu dem Abgasrohr (1) entgegen der Festziehumfangsrichtung (F) in einer Löseumfangsrichtung (L) angeformt ist, gegen die das Sicherungselement (14) aus der Fixierposition durch Verdrehen in der Löseumfangsrichtung (L) verstellbar ist und das Sicherungselement (14) in der Löseposition axial entgegen der Aufsteckbewegung von dem Abgasrohr (1) abziehbar ist.

2. Abgasrohr nach Anspruch 1,
**dadurch gekennzeichnet,**
**dass** die Löseanschlagsgeometrie (L) in einem Bereich axial zwischen den Bajonettverschlussmitteln (5) und einem der Wellrohrabschnitte (2) auf einer von einem endseitigen der Glattrohrabschnitte (3) abgewandten Seite der Bajonettverschlussmittel (5) angeordnet ist.

3. Abgasrohr nach einem der Ansprüche 1 oder 2,
**dadurch gekennzeichnet,**
**dass** die Bajonettverschlussmittel (5) mehrere in Umfangsrichtung beabstandete, vorzugsweise auf derselben Axialposition befindliche und sich jeweils in Umfangsrichtung sowie in radialer Richtung nach außen erstreckende Radialfortsätze (6) umfassen und dass die sicherungselementseitigen Bajonettverschlussmittel (16) in der Löseposition axial durch mindestens einen zwischen zwei der Radialfortsätze (6) gebildeten Abstand verstellbar sind.

4. Abgasrohr nach Anspruch 3,
**dadurch gekennzeichnet,**
**dass** ein in der Festziehumfangsrichtung gelegenes Löseanschlagsgeometrieende der Löseanschlagsgeometrie (8) in axialer Richtung mit einem in der Festziehumfangsrichtung (F) gelegenen und einen der Abstände begrenzenden Radialfortsatzende (13) von einem der radialen Radialfortsätze (6) fluchtet oder zum dem Radialfortsatzende (13) in der Festziehumfangsrichtung (F) beabstandet ist, insbesondere in dem es das Radialfortsatzende (6) in der Festziehumfangsrichtung (F) überragt.

5. Abgasrohr nach Anspruch 4,
**dadurch gekennzeichnet,**
**dass** mehreren, insbesondere sämtlichen, der Radialfortsätze (6) eine Löseanschlagsgeometrie (8) zugeordnet ist.

6. Abgasrohr nach einem der vorhergehenden Ansprüche,
**dadurch gekennzeichnet,**
**dass** an das Abgasrohr (1) eine die Fixierposition definierende Fixieranschlagsgeometrie (9) zur Begrenzung der Verdrehbewegung des Sicherungselementes (14) relativ zu dem Abgasrohr (1) in der Festziehumfangsrichtung (F) angeformt ist, die derart ausgebildet und angeordnet ist, dass das Sicherungselement (14) gegen diese in der Festziehumfangsrichtung (F) nach erfolgter axialer Steckbewegung verdrehbar ist.

7. Abgasrohr nach Anspruch 6,
**dadurch gekennzeichnet,**
**dass** die Fixieranschlagsgeometrie (9) und die Löseanschlagsgeometrie (8) von zwei in Umfangsrichtung beabstandeten Flanken einer gemeinsamen radialen Erhöhung gebildet sind oder von separaten, bevorzugt in Umfangsrichtung beabstandeten radialen Erhöhungen des Abgasrohrs (1).

8. Abgasrohr nach einem der Ansprüche 6 oder 7,
**dadurch gekennzeichnet,**
**dass** an das Abgasrohr (1), vorzugsweise in der Festziehumfangsrichtung (F) vor der Fixieranschlagsgeometrie (9), eine Widerstandgeometrie zum Erhöhen des Kraftaufwandes an einer definierten Umfangsrelativposition von Abgasrohr (1) und Sicherungselement (14) beim Relativverdrehen des Sicherungselementes (14) und des Abgasrohres (1) beim Herstellen und/oder Lösen des in axialer Richtung wirksamen Formschlusses angeformt ist.

9. Abgasrohr nach einem der Ansprüche 6 bis 8,
**dadurch gekennzeichnet,**
**dass**, vorzugsweise in der Festziehumfangsrichtung (F) vor der Fixieranschlaggeometrie (9), und bevorzugt in der Festziehumfangsrichtung (F) hinter der Widerstandgeometrie (10), eine, mehrere radialer Hügel umfassende Haptikgeometrie (12) vorgesehen ist, die beim Verdrehen des Sicherungselementes (14) relativ zu dem Abgasrohr (1) in die Fixierposition und/oder in die Löseposition zu einer, vorzugsweise mehrere Schwingungsmaxima aufweisenden Vibration des Sicherungselementes (14) führt.

10. Abgasrohr nach einem der vorhergehenden Ansprüche,
**dadurch gekennzeichnet,**
**dass** benachbart zu der Mehrzahl der Glattrohrabschnitte (3), insbesondere benachbart zu jedem der jeweils zwischen zwei der Wellrohrabschnitten angeordneten Glattrohrabschnitte (3) jeweils Bajonettverschlussmittel (5), vorzugsweise zusammen mit einer Löseanschlagsgeometrie (8) und/oder einer Fixieranschlagsgeometrie (9), angeordnet sind, bevorzugt im Bereich beider axialer Enden des jeweiligen Glattrohrabschnittes (3).

11. Abgasrohr nach einem der vorhergehenden Ansprüche,
**dadurch gekennzeichnet,**
**dass** die Löseanschlagsgeometrie (8) und die Bajonettverschlussmittel (5) von der Abgasrohrinnenseite her betrachtet als sich nach radial außen und in Umfangsrichtung erstreckende Vertiefungen ausgebildet sind.

12. Verwendung eines Abgasrohrabschnittes mit mindestens zwei endseitigen Glattrohrabschnitten (3) und mindestens einem, bevorzugt mehreren dazwischen angeordneten, Wellrohrabschnitt(en) (2), der erhalten ist durch Abtrennen von einem Abgasrohr (1) nach einem der vorhergehenden Ansprüche, zur Abgasführung einer Heizungsanlage, insbesondere in einem Gebäude.

13. Abgasrohrsystem umfassend ein Abgasrohr (1) nach einem der Ansprüche 1 bis 11 oder einen aus einem solchen Abgasrohr (1) abgetrennten Abgasrohrabschnitt mit mindestens zwei endseitigen Glattrohrabschnitten (3) und mindestens einem, bevorzugt mehreren dazwischen angeordneten, Wellrohrabschnitt(en) (2), sowie ein, bevorzugt hülsenförmiges Sicherungselement (14), aufweisend mit den Bajonettverschlussmitteln (5) des Abgasrohres (1) korrespondierende sicherungselementseitige Bajonettverschlussmittel (16) zum Zusammenwirken mit den Bajonettverschlussmitteln (5) des Abgasrohres (1) oder des Abgasrohrabschnittes in der Art eines Bajonettverschlusses (5) zur Herstellung eines in axialer Richtung wirksamen Formschlusses, wobei an dem Sicherungselement (14) Wechselwirkungsmittel, insbesondere in Form der sicherungselementseitigen Bajonettverschlussmittel (16), angeformt sind, die durch Verdrehen des Sicherungselement (14) aus der Fixierposition in die Löseposition in Umfangsrichtung gegen die Löseanschlagsgeometrie (8) verdrehbar sind.

14. Abgasrohrsystem nach Anspruch 13,
**dadurch gekennzeichnet,**
**dass** an das Sicherungselement (14) eine Gegenhaptikgeometrie, insbesondere in Form der sicherungselementseitigen Bajonettverschlussmittel (16) zur Wechselwirkung mit der Hapitkgeometrie (12) des Abgasrohres (1) zum Erzeugen einer Vibration des Sicherungselementes (14) bei einer Relativverdrehbewegung zwischen Abgasrohr (1) und Sicherungselement (14) angeformt sind.

15. Verfahren zum Lösen einer Verbindung zwischen einem Abgasrohr (1) oder einem Abgasrohrabschnitt des Abgasrohrsystems nach einem der Ansprüche 13 oder 14 und einem Muffenrohr (19), wobei das Sicherungselement (14) des Abgasrohrsystems an dem Muffenrohr (19) axial gesichert ist,
**dadurch gekennzeichnet,**
**dass** das Sicherungselement (14) aus seiner Fixierposition in der Löseumfangsrichtung relativ zu dem Abgasrohr (1) und dem Muffenrohr (19) verdreht wird, bis die Wechselwirkungsmittel des Sicherungselementes (14) gegen die Löseanschlagsgeometrie (8) des Abgasrohres (1) anschlagen, woraufhin ein endseitiger Glattrohrabschnitt (3) des Abgasrohres (1) oder des Abgasrohrabschnittes axial aus einer Muffe (18) eines Muffenrohres (19) herausgezogen wird.
